# EUROPEAN PATENT SPECIFICATION

(11) **EP 2 456 061 B1**
(45) Date of publication and mention of the grant of the patent: **16.09.2020**
(21) Application number: 11165828.2
(22) Date of filing: 12.05.2011
(51) Int. Cl.: H02M 7/06

(54) **Power supply circuit**
Stromversorgungsschaltung
Circuit d'alimentation électrique

(30) Priority: 17.11.2010 JP 2010256646
(43) Date of publication of application: 23.05.2012
(73) Proprietor: OHJEC Corporation, Saitama-shi Saitama 338-0002 (JP)
(72) Inventor: Murai, Yuzo, Nishitokyo-shi, Tokyo 142-0051 (JP)
(74) Representative: TBK

(56) References cited:
- CN-B- 101 106 674
- DE-A1- 4 124 864
- KR-A- 20100 118 725
- US-A1- 2010 176 755

## Description

### BACKGROUND OF THE INVENTION

### Field of the Invention

The present invention relates to a power supply circuit that divides power from a commercial power supply and supplies the power to loads, which is favorable for use as a power supply for an electric device, for example, an LED device, such as an indoor/outdoor lighting device, an electronic billboard, colored lights or a signboard, or a heater device such as a floor heater or a snow-melting system.

### Description of the Related Art

In recent years, devices using LEDs, which have long-life and low-power consumption, have commonly been distributed for the aforementioned electric devices. For such a power supply circuit for an LED device, for example, the switching power supply disclosed in Japanese Patent Laid-Open No. 2007-274751 is known.

In the switching power supply in Japanese Patent Laid-Open No. 2007-274751, a main circuit thereof includes: a noise filter circuit including capacitors and coils; a rectifier/smoother circuit including diodes and capacitors; a radiator-equipped power switching element such as a field-effect transistor, and a radio-frequency transformer. Also, in addition to the main circuit, the switching power supply includes a control circuit, an overvoltage protection circuit and an overcurrent protection circuit, and the electronic components included in these circuits are mounted on a circuit board, which is housed in a metal case.

In the aforementioned switching power supply, an input voltage from a commercial power supply is stepped down by means of the radio-frequency transformer to adapt the voltage to a rated voltage for LEDs. However, in the radio-frequency transformer, an iron core is heated by an eddy current generated in the iron core, causing an energy loss called an iron loss. In particular, such iron loss is large in a radio-frequency transformer. Furthermore, the radio-frequency transformer also causes another energy loss, which is a copper loss caused by the resistances of conductors. These iron and copper losses result in a problem in deterioration in energy efficiency of power supply.

Also, in the aforementioned switching power supply, the radiator-equipped power switching element is employed for dissipation of heat in the radio-frequency transformer, and the overvoltage protection circuit and the overcurrent protection circuit are provided for prevention of an LED failure. However, since a large number of electronic components are required for providing these elements and circuits, a circuit board with a large size is needed, causing a problem in causing an increase in size of the power supply. Furthermore, for a method for suppressing the aforementioned energy losses, the current density of the conductors in the radio-frequency transformer may be decreased; however, in this case, it is necessary to increase the wire diameter of the conductors, increasing the weight of the radio-frequency transformer, as well as providing another factor in causing an increase in size of the power supply.

The document US 2010/176755 A1 discloses power conversion systems and methods for driving a plurality of motor loads, in which an autotransformer receives AC input currents and provides a plurality of multiphase outputs at a non-zero phase angle relative to one another, and the individual multiphase outputs are provided to corresponding motor drives with rectifiers to convert the multiphase outputs to DC electrical power, and inverters to convert the DC power to AC to drive corresponding motor loads.

Further related art is known from the documents KR 2010 0118725 A, CN 101 106 674 B and DE 41 24 864.

### SUMMARY OF THE INVENTION

The present invention has been made in view of such problems as described above, and an object of the present invention is to provide a power supply circuit enabling energy efficiency enhancement and downsizing of a power supply.

In order to achieve the above object, there is provided a power supply circuit, as defined by the claims.

The following is a brief summary of the present disclosure:
A power supply circuit according to the present disclosure includes: an input terminal to be connected to a commercial power supply; an input conductor connected to the input terminal; a winding connected to the input conductor; a plurality of output conductors connected to respective partial windings resulting from dividing the winding into a plurality of parts; and a plurality of output terminals connected to the respective output conductors, each output terminal being independently connected to a load.

In the power supply circuit including the above configuration, there are no specific limitations on the form and part count of the winding. For example, a configuration in which the output conductors are connected to the respective partial windings with an end part of the winding left as a margin, an input voltage is stepped down in the winding, and the stepped-down voltage is divided and output or a configuration in which the input conductor is connected to the winding with an end part of the winding left as a margin, an input voltage is stepped up in the winding, and the stepped-up voltage is divided and output may be employed. A two-way divider circuit in which the winding includes an autotransformer, and the power supply circuit includes: first output terminals connected to a beginning end of a series winding and a beginning end of a shunt winding; and second output terminals connected to the beginning end of the shunt winding and an terminal end of the shunt winding can also be employed. A three-way divider circuit in which the winding includes an autotransformer, and the power supply circuit includes: first output terminals connected to a beginning end of a series winding and a beginning end of a shunt winding; second output terminals connected to the beginning end of the shunt winding and a point in the shunt winding; and third output terminal connected to the point in the shunt winding and a terminal end of the shunt winding can also be employed.

Also, the power supply circuit including the above configuration, even if the voltages resulting from the division are not equal to each other, if currents flowing in loads are equal to each other, almost no current flows in the winding, reducing the energy losses. Therefore, in order to reduce the energy losses, it is preferable that the winding be evenly divided in terms of a turn count.

Furthermore, although in the power supply circuit including the above configuration, there are no specific limitations on the loads connected to the output terminals, for example, an electronic device using LEDs can be connected. In such case, it is necessary to convert an alternate voltage supplied from a commercial power supply into a direct-current voltage after transformation of the alternate voltage. Therefore, as a mode of the power supply circuit according to the present disclosure, a configuration in which a rectifier circuit that converts an alternate-current voltage resulting from division in the winding into a direct-current voltage is provided between the output conductors and the output terminals may be employed. Here, if an LED device is connected to the power supply circuit, it is preferable that a current limiter circuit that limits a current flowing into a load be provided at an output end of the rectifier circuit in order to adapt the current to a rated current for the LEDs.

The power supply circuit according to the present disclosure efficiently divides an input power supplied from a commercial power supply and supplies the power resulting from the division to respective loads, without causing almost any energy loss. Furthermore, even though one of a plurality of loads varies, the power supply circuit prevents the other loads from being affected by the variation of the load, enabling stable power supply.

Also, the power supply circuit according to the present disclosure enables designing of the winding according to a current corresponding to a maximum variation width of a load current, and since only very small current flows in the winding, almost no heat is generated in the winding. Accordingly, the power supply circuit eliminates the need to provide a radiator and/or increase the wire diameter of the winding, and thus, can be manufactured using a small-sized winding, enabling downsizing of the power supply circuit.

### BRIEF DESCRIPTION OF THE DRAWINGS

FIG. 1 is a circuit diagram illustrating a basic configuration of a power supply circuit according to the present invention;
FIG. 2 is a diagram illustrating the principle of a power supply circuit according to the present invention;
FIG. 3 is a diagram illustrating the principle of a power supply circuit according to the present invention;
FIG. 4 is a diagram illustrating the principle of a power supply circuit according to the present invention;
FIG. 5 is a diagram illustrating the principle of a power supply circuit according to the present invention;
FIG. 6 is a diagram illustrating the principle of a power supply circuit according to the present invention;
FIG. 7 is a diagram illustrating the principle of a power supply circuit according to the present invention;
FIG. 8 is a chart providing a summary of actual measurement data for a power supply circuit according to the present invention;
FIG. 9 is a graph indicating a relationship between load currents and an input current;
FIG. 10 is a graph indicating a relationship between a load current increase amount and an input current increase amount;
FIG. 11 is a circuit diagram illustrating a two-way divider/rectifier circuit according to example 1 of the present invention;
FIG. 12 is a circuit diagram illustrating an example of a full-wave rectifier circuit in FIG. 11 ;
FIG. 13 is a circuit diagram illustrating an example of a current limiter circuit in FIG. 11 ;
FIG. 14 is a circuit diagram illustrating another example of a current limiter circuit in FIG. 11 ;
FIG. 15 is a waveform diagram of a voltage and a current at a point A in FIG. 11 ;
FIG. 16 is a circuit diagram illustrating a two-way divider/rectifier/smoother circuit according to example 2 of the present invention;
FIG. 17 is a circuit diagram illustrating an example of a constant current circuit in FIG. 16 ;
FIG. 18 is a waveform diagram of a voltage and a current at a point B in FIG. 16 ;
FIG. 19 is a circuit diagram illustrating a three-way divider/rectifier circuit according to example 3, which constitutes an example useful for understanding the present invention;
FIG. 20 is a circuit diagram illustrating a three-way divider/rectifier circuit according to example 4, which constitutes an example useful for understanding the present invention;
FIG. 21 is a circuit diagram illustrating a step-down/two-way divider circuit according to example 5, which constitutes an embodiment of the present invention;
FIG. 22 is a circuit diagram illustrating a variation of the step-down/two-way divider circuit in FIG. 21, which constitutes an example useful for understanding the present invention;
FIG. 23 is a circuit diagram illustrating another variation of the step-down/two-way divider circuit in FIG. 21, which constitutes an embodiment of the present invention;
FIG. 24 is a circuit diagram illustrating a variation of a step-up/two-way divider circuit according to example 6, which constitutes an embodiment of the present invention;
FIG. 25 is a circuit diagram illustrating a variation of the step-down/two-way divider circuit in FIG. 21, which constitutes an example useful for understanding the present invention; and
FIG. 26 is a circuit diagram illustrating a variation of the step-up/two-part divider circuit in FIG. 24, which constitutes an example useful for understanding the present invention.

### DETAILED DESCRIPTION OF THE PREFERRED EMBODIMENTS

Embodiments of the present invention, and example for its understanding, will be described below with reference to the drawings.

First, a basic configuration of a power supply circuit according to the present invention will be described.

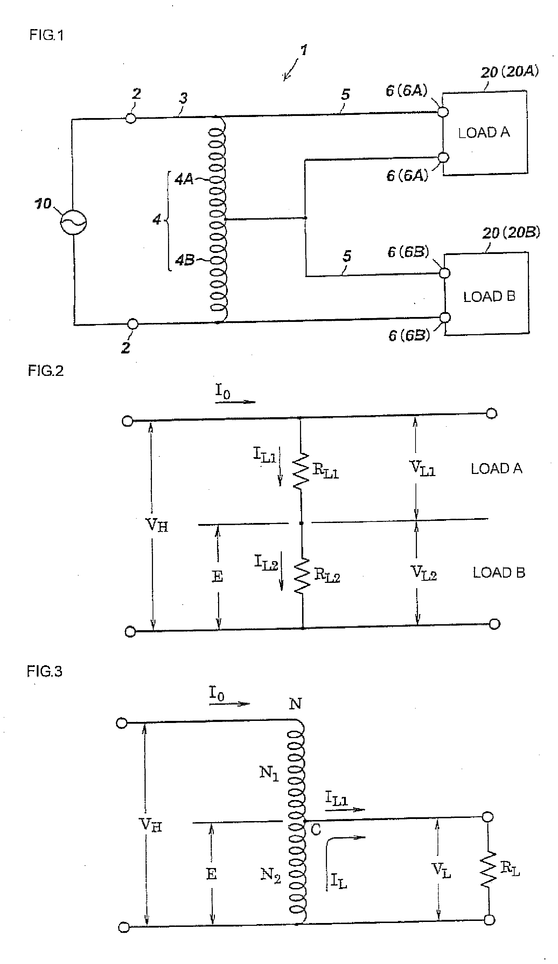

As illustrated in FIG. 1, a power supply circuit 1 includes input terminals 2, input conductors 3, a winding 4, output conductors 5 and output terminals 6. Each input terminal 2 is connected to a commercial power supply 10, and an alternate power supply voltage from the commercial power supply 10 is input to the input terminal 2. Between the input terminals 2, 2, the winding 4 is connected in series via the input conductors 3. The winding 4 is divided into a plurality of parts (two parts in this example) between a beginning end and a terminal end thereof, and opposite ends of respective partial windings 4A, 4B resulting from the division are connected to the output conductors 5, 5. Ends of the respective output conductors 5, 5 are provided with respective output terminals 6 (6A, 6B). Furthermore, loads 20 (20A, 20B), which are independent from each other, are connected to the two output terminals 6A, 6B, and stable powers obtained by dividing the alternate power supply voltage by means of the winding 4 are supplied to the loads 20.

Next, the principle of a power supply circuit according to the present invention will be described.

### (1) Loads

Considering a circuit such as illustrated in FIG. 2, the following can be seen.
- As a load R_{L1} is varied, currents I₀, I_{L1}, I_{L2} and voltages V_{L1}, V_{L2}, E vary.
- If R_{L1} = R_{L2}, V_{L1} = V_{L2} = V_{H}/2.
- If R_{L1} = R_{L2}, the voltage E exhibits E = V_{H}/2 irrespective of the voltage V_{H}.
- If the voltage E exhibits E = V_{L1} = V_{L2} = V_{H}/2, a voltage of a half of a power supply voltage can be output to each of loads A, B. This means that power, which is a half of a power supply voltage, can efficiently be used in each of the loads A, B with no energy loss.
- If R_{L1} # R_{L2}, I_{L1} = I_{L2}, but V_{L1} ≠ V_{L2}, resulting in the voltage E varying. In this case, the load voltages vary, and thus, the power supply circuit cannot be used for a power supply.

Accordingly, if R_{L1} = R_{L2}, the power supply circuit can be used for a power supply. Meanwhile, if R_{L1} ≠ R_{L2}, the voltages of the loads A, B vary, and thus, the power supply circuit cannot be used for a power supply. Therefore, it is necessary to provide a method for preventing the voltage E varying even if R_{L1} ≠ R_{L2}.

### (2) Winding

In an autotransformer, which is illustrated in FIG. 3, where N is the turn count of the entire winding, N₁ is the turn count of a series winding, and N₂ is the turn count of a shunt winding, if N = N₁+N₂ and N₁ = N₂, the following can be seen.
- If a load R_{L} is varied, I_{L} varies, but V_{L} does not vary.
- Where I_{L} is varied, the relationship between a variation amount ΔI_{L} of I_{L} and a variation amount ΔI₀ of I₀ is ΔI₀ = ΔI_{L}/2.
- If the turn counts N₁ and N₂ are equal to each other, a voltage E at a midpoint C of the winding exhibits E = V_{H}/2 irrespective of the values of the load R_{L} and an input voltage V_{H}.

### (3) Load and winding combination

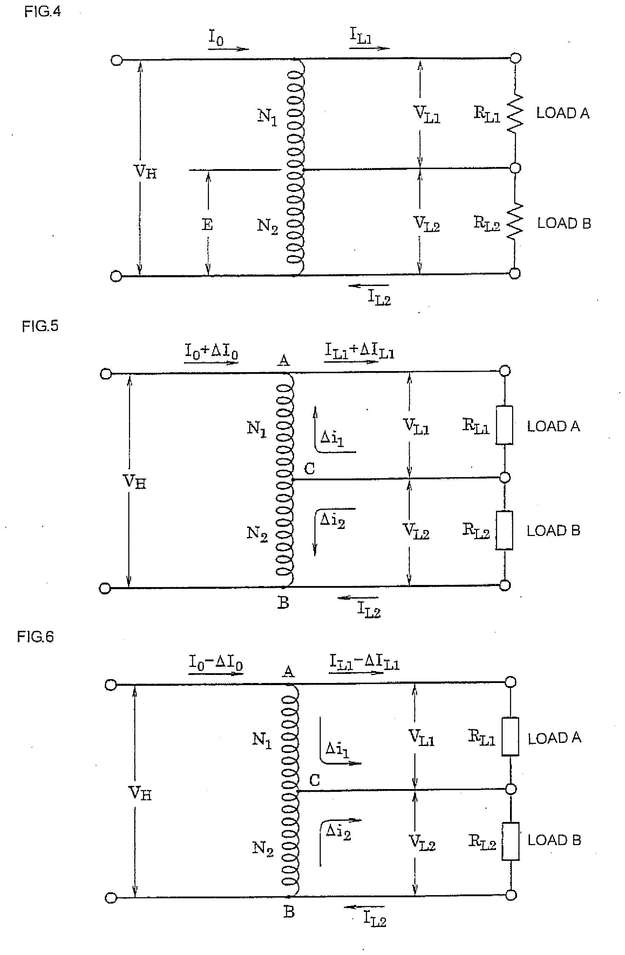

Considering an equivalent circuit, which is illustrated in FIG. 4, obtained by combining the circuits in FIGS. 2 and 3, the following can be seen.
- Where N₁ = N₂, E = V_{H}/2 and E has a voltage at a midpoint of V_{H}.
- Voltages resulting from division exhibit V_{L1} = V_{L2}, enabling stable power supply to R_{L1} (load A) and R_{L2} (load B) .
- Where R_{L1} = R_{L2}, I_{L1} = I_{L2} = I₀-exciting current (no-load current), enabling efficient power supply to the loads.

In reality, I₀ >> exciting current, the value of the exciting current is extremely small so that it can be ignored. With a transformer used for a test, when I_{L1} = I_{L2} = 250 [mA], the exciting current was 2 to 5 [mA].

### (4) Load variation - Case 1

With the circuit illustrated in FIG. 5, a case where the balance between loads is varied will be considered. However, it is assumed that N₁ = N₂, R_{L2} is constant and only R_{L1} is varied (R_{L1} < R_{L2}).

If R_{L2} is constant and R_{L1} is varied to be smaller, where an amount of increase of a current flowing in a load A is ΔI_{L1}, and an amount of increase of an input current is ΔI₀, the following can be seen.
- ΔI₀ = ΔI_{L1}/2, and I_{L2} does not vary (V_{L1} = V_{L2} = V_{H}/2).
- The current in a winding N₁ varies by Δi₁ in the direction from C to A.

Accordingly, Δi₁ = ΔI_{L1}/2 = ΔI₀.
- The current in a winding N₂ varies by Δi₂ in the direction from C to B.

Accordingly, Δi₂ = ΔI_{L1}/2 = ΔI₀.

Furthermore, an amount of increase in VA on the load side (V_{L1}·ΔI_{L1}) is equal to an amount of increase in VA on the input side (V_{H}·ΔI₀).

For example, considering the case where V_{H} = 100 [V], N₁ = N₂, V_{L1} = V_{L2} = 50 [V] and ΔI_{L1} = 1 [A], VA on the load side and VA on the input side can be calculated as follows.
Load side: 50 [V]×1 [A] = 50 [VA], ΔI_{L1} = 1 [A]
Input side: 100 [V]×0.5 [A] = 50 [VA], ΔI₀ = 0.5 [A]

### (5) Load variation - Case 2

With the circuit illustrated in FIG. 6, a case where the balance between the loads is varied will be considered. However, it is assumed that N₁ = N₂, R_{L2} is constant and only R_{L1} varies (R_{L1} > R_{L2}).

If R_{L2} is constant and R_{L1} is varied to be larger, where an amount of decrease in a current flowing in a load A is ΔI_{L1} and an amount of decrease in an input current is ΔI₀, the following can be seen.
- ΔI₀ = ΔI_{L1}/2 and I_{L2} does not vary (V_{L1} = V_{L2} = V_{H}/2).
- The current in the winding N₁ varies by Δi₁ in the direction from A to C.

Accordingly, Δi₁ = ΔI_{L1}/2 = ΔI₀.
- The current in the winding N2 varies by Δi₂ in the direction from B to C.

Accordingly, Δi₂ = ΔI_{L1}/2 = ΔI₀.

Furthermore, an amount of decrease in VA on the load side (V_{L1}·ΔI_{L1}) is equal to an amount of decrease in VA on the input side (V_{H}·ΔI₀).

For example, considering the case where V_{H} = 100 [V], N₁ = N₂, V_{L1} = V_{L2} = 50 [V] and ΔI_{L1} = 0.5 [A], VA on the load side and VA on the input side can be calculated as follows.
Load side: 50 [V]×0.5 [A] = 25 [VA], ΔI_{L1} = 0.5 [A]
Input side: 100[V]×0.25 [A] = 25 [VA], ΔI₀ = 0.25 [A]

### (6) Conclusion

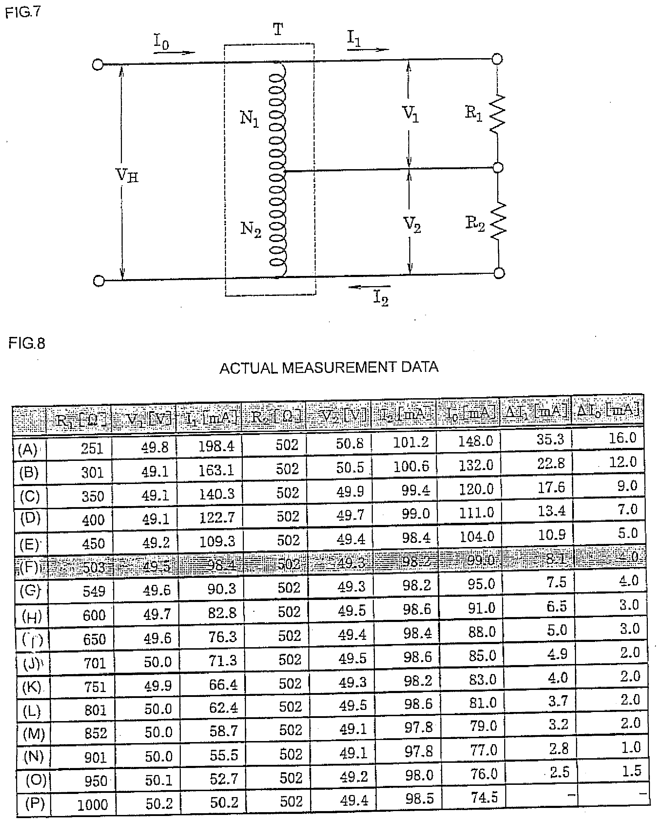

From the consideration in sections (1) to (5) above, it can be concluded that the following effects can be provided in the circuit illustrated in FIG. 7.
- If load currents are equal to each other (I₁ = I₂), the size of an autotransformer T can be made to be very small.
- The autotransformer T enables efficient power supply with small energy loss such as copper loss and iron loss. In particular, where a toroidal transformer is used, the energy loss is extremely small.
- Inclusion of a constant current circuit (current limiter circuit) in a load enables stable power supply even if the load is varied.

Next, actual measurement data for the power supply circuit according to the present invention will be described.

The voltage and current values resulting from variations of a load in the power supply circuit illustrated in FIG. 7 were measured. The measurements were made on the conditions: an input voltage V_{H} is 100[V]; a turn count N₁ of a series winding and a turn count N₂ of a shunt winding in the autotransformer T are equal to each other; the value of the load R₂ is constant; and only the value of the load R₁ is varied. The measurement results are indicated in the table in FIG. 8. In the table, V₁ and V₂ are load voltages applied to the loads R₁ and R₂, I₀ is an input current flowing on the primary side, I₁ and I₂ are load currents flowing in the loads R₁ and R₂, ΔI₀ is an amount of increase of the input current flowing on the primary side and ΔI₁ is an amount of increase of the load current flowing in the load R₁.

As is clear from (F) in the table, where the loads R₁ and R₂ are equal to each other, the input voltage V_{H} is evenly divided into two ways, the load voltages V₁ and V₂ are equal to each other, and the load currents I₁ and I₂ are both substantially equal to the input current I₀.

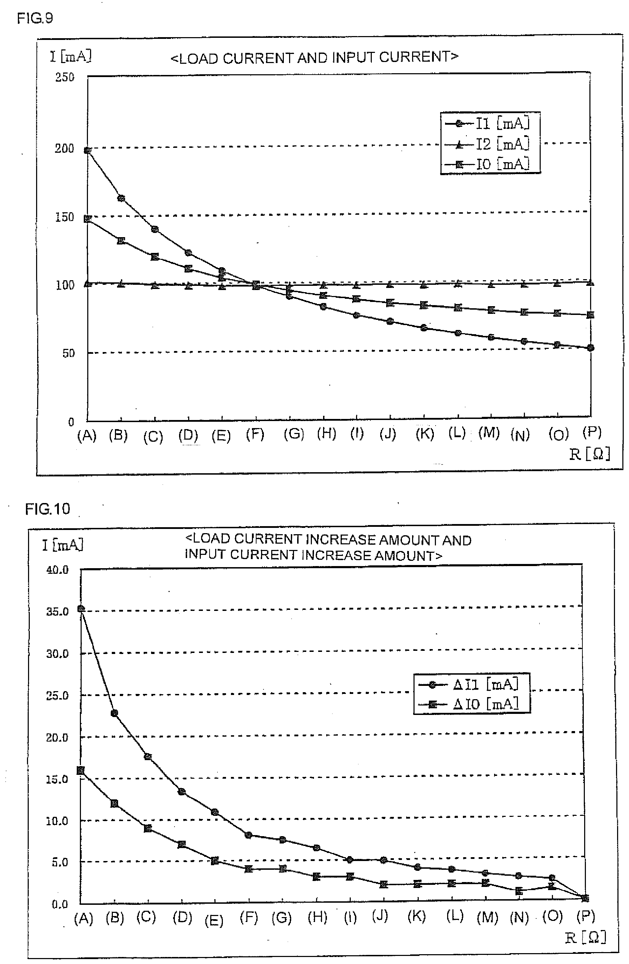

Considering the case where the load was varied, as indicated in (A) to (E) in the table, even if the load R₁ is decreased, the load voltages V₁ and V2 are equal to each other with almost no variations. Also, as is clear from the graph in FIG. 9, as the load R₁ decreases, the load current I₁ and the input current I₀ increase respectively, but the load current I₂ has almost no variations.

Contrary to the above, as indicated in (G) to (P) in the table, it can be seen that even if the load R₁ increases, the load voltages V₁ and V₂ are equal to each other with almost no variations. Also, as is clear from the graph in FIG. 9, as the load R₁ increases, the load current I₁ and the input current I₀ decrease respectively, but the load current I₂ has almost no variations.

Furthermore, considering the relationship between the load current increase amount ΔI₁, which is a result of variation of the load and the input current increase amount ΔI₀, as indicated in the graph in FIG. 10, it can be seen that the input current increase amount ΔI₀ is approximately a half of the load current increase amount ΔI₁. In (K), (L) and (M) in the table, there are no variations in the input current increase amount ΔI₀, which can be considered to be attributed to measurement errors.

From the above-described measurement results, it has turned out that with the power supply circuit in FIG. 7, the input voltage V_{H} can efficiently be divided without no energy loss and evenly supplied to the respective loads, and even if one of the loads is varied, such variation does not affect the other load, and the load voltages V₁ and V₂ resulting from the division are both stable.

Lastly, examples of the power supply circuit according to the present invention will be described.

### [Example 1]

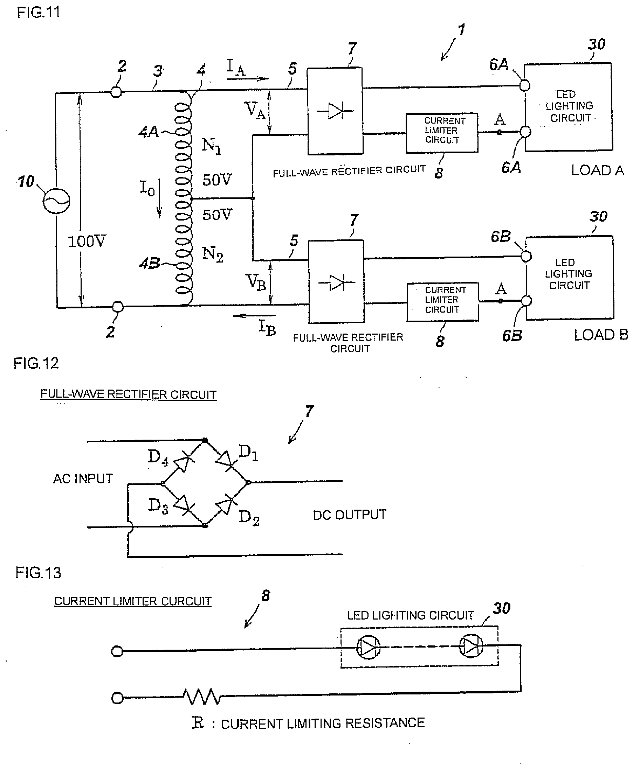

FIG. 11 illustrates a power supply circuit 1, which is an example of employing the power supply circuit according to the present invention for a power supply for LEDs by connecting the power supply circuit to LED lighting circuits 30, which are loads. In the Figure, the power supply circuit 1, which is a two-way divider/rectifier circuit, includes input terminals 2, input conductors 3, a winding 4, output conductors 5, output terminals 6, full-wave rectifier circuits 7 and current limiter circuits 8.

The input terminals 2 are connected to a commercial power supply 10, and a power supply voltage of AC 100V is input from the commercial power supply 10 to the input terminals 2. In the winding 4, which includes an autotransformer, a beginning end of a series winding 4A and a terminal end 5 of a shunt winding 4B are connected in series between the input terminals 2, 2 via the input conductors 3.

First output terminals 6A from among the two sets of output terminals 6 are connected to the beginning end of the series winding 4A and a beginning end of the shunt winding 4B via the corresponding output conductors 5. The first output terminals 6A are connected to one of the LED lighting circuits 30, which is a load A. Each LED lighting circuit 30 includes a LED group in which a plurality of LEDs is connected in series. Second output terminals 6B, which are the other output terminals 6, are connected to the beginning end of the shunt winding 4B and the terminal end of the shunt winding 4B via the corresponding output conductors 5. As with the first output terminals 6A, the second output terminals 6B are connected to the other LED lighting circuit 30, which is a load B.

Output ends of the series winding 4A and the shunt winding 4B are provided with the respective full-wave rectifier circuits 7, 7. For each full-wave rectifier circuit 7, an example of which is illustrated in FIG. 12, a bridge rectifier circuit in which a bridge is formed by four diodes D₁ to D₄ can be employed. The bridge rectifier circuit receives an input of an alternate-current voltage transformed by the winding 4, performs full-wave rectification to convert the alternate-current voltage to a direct-current voltage, and outputs the direct-current voltage.

Between the full-wave rectifier circuits 7 and the output terminals 6, 6, respective current limiter circuits 8, 8 are provided. Each current limiter circuit 8 is a protection circuit that limits a current flowing in a load to prevent overcurrent in the load and breakage of the load due to a temperature increase. As in an example illustrated in FIG. 13, each current limiter circuit 8 can include a current limiting resistance R connected in series to an output end of the corresponding full-wave rectifier circuit 7. This configuration limits respective currents flowing in the LED lighting circuits 30 by the current limiting resistance R so as to fall within a rated current for LEDs.

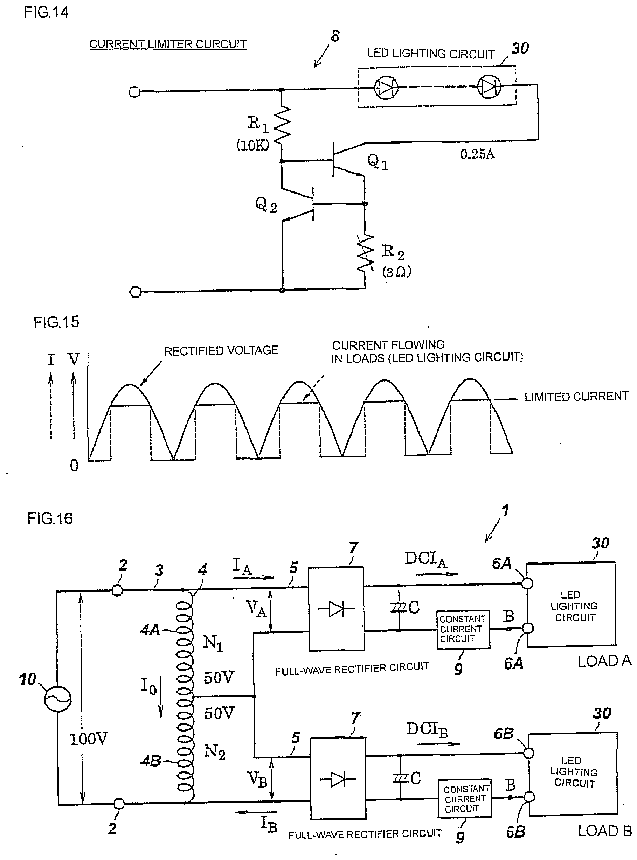

Also, as in another example illustrated in FIG. 14, each current limiter circuit 8 can include a bias resistance R1, two transistors Q₁, Q₂ and a current detection resistance R₂. The bias resistance R₁ is connected to an output end of the corresponding full-wave rectifier circuit 7, and a base of the transistor Q₁ and a collector of the transistor Q₂ are connected to the bias resistance R₁. The current detection resistance R₂ is connected to an emitter of the transistor Q₁ and a base and an emitter of the transistor Q₂. With this configuration, upon application of a bias voltage from the bias resistance R₁ to the base of the transistor Q₁, the transistor Q₁ is turned on, causing a current to flow in the corresponding LED lighting circuit 30, thereby the LEDs being turned on. Also, when a current flowing in the current detection resistance R₂ exceeds a limited current, the transistor Q₂ is turned on, causing the bias voltage in the transistor Q₁ to be interrupted, and the transistor Q₁ is thereby turned off, preventing an overcurrent exceeding a rated current from flowing in the LED lighting circuit 30.

The power supply circuit 1 according to example 1, which is configured as described above, evenly divides an alternate power supply voltage input from the commercial power supply 10, by means of the winding 4, whereby stable power is supplied to the LED lighting circuits 30. A limited current such as illustrated in FIG. 15 flows at a point A in FIG. 11, and thus, flows in the LED lighting circuits 30. Accordingly, there are only small variations among the elements in the loads, and thus, there are only small assembly variations as well. Since each LED lighting circuit 30, which is a load, is provided with the corresponding current limiter circuit 8, the load voltage does not vary, and thus, V_{A} = V_{B}. Accordingly, the relationship of I_{A} ≈ I_{B} can be provided for load currents, and thus, the current flowing in the autotransformer becomes small. The value of the current flowing in the autotransformer is around a value of an exciting current for the winding 4 + 1/2 (I_{A}-I_{B}).

For the above-described reasons, the power supply circuit 1 according to the present example enables efficient supply of input power supplied from the commercial power supply 10 to the two LED lighting circuits 30, 30. Also, the power supply circuit 1 enables an autotransformer to be designed according to a current adapted to a maximum variation width (maximum value of 1/2 (I_{A}-I_{B}) for load currents, not currents I_{A}, I_{B} necessary for the loads. Furthermore, since only a very small current flows in the autotransformer, the winding 4 in the autotransformer generates almost no heat. Accordingly, there is no need to provide a radiator or increase the wire diameter of the series winding 4A in the power supply circuit 1, enabling the autotransformer to be manufactured so as to have a small size, and thus, enabling downsizing of the power supply circuit 1.

### [Example 2]

FIG. 16 illustrates a power supply circuit 1, which is an example of employing the power supply circuit according to the present invention for a power supply for LEDs by connecting the power supply circuit to LED lighting circuits 30 as in example 1. In the Figure, the power supply circuit 1 is a two-way divider/rectifier/smoother circuit in which electrolytic capacitors C and constant current circuits 9 are provided instead of the current limiter circuits 8 in example 1.

An electrolytic capacitor C is connected in parallel to output ends of each full-wave rectifier circuit 7. The electrolytic capacitor C functions as a smoother circuit for smoothing a pulsating current output from the full-wave rectifier circuit 7 to provide a direct current.

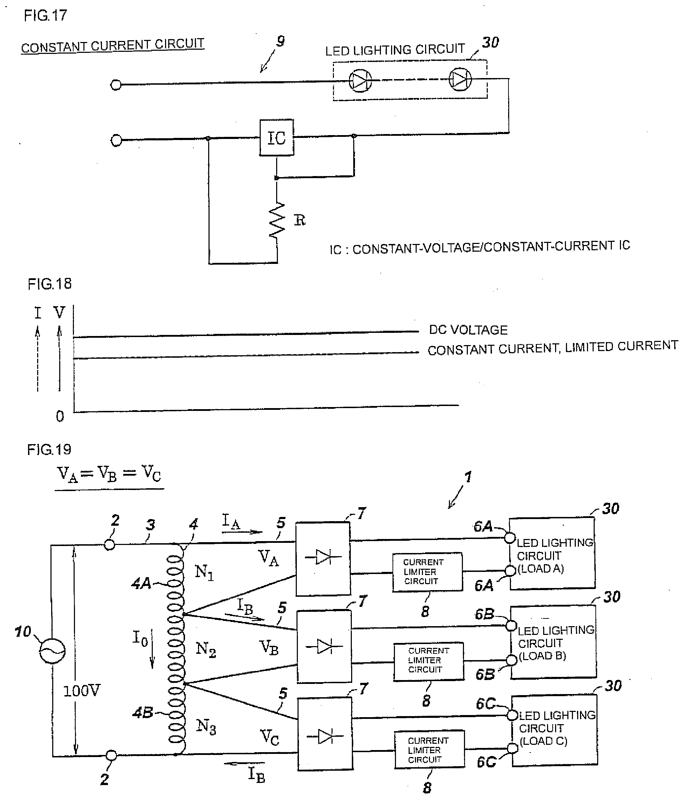

Between the electrolytic capacitors C and the output terminals 6A, 6B, respective constant current circuits 9, 9 are provided. As in an example illustrated in FIG. 17, each constant current circuit 9 can include a constant-voltage constant-current IC connected in series to an LED lighting circuit 30, and a resistance R connected to the IC. With this configuration, a current flowing in the LED lighting circuit 30 is limited to provide constant-current driving, thereby protecting LEDs included in the LED lighting circuit 30 from overcurrent.

The power supply circuit 1 according to example 2 is configured as described above, a limited, constant current such as illustrated in FIG. 18 flows at point B in FIG. 16 and thus, flows in the LED lighting circuit 30. Accordingly, direct currents DCI_{A}, DCI_{B} caused by variations of the loads are adjusted in the constant current circuits 9, enabling provision of DCI_{A} = DCI_{B}. Accordingly, input power supplied from a commercial power supply 10 is evenly divided and efficiently supplied to the two LED lighting circuits 30, 30. Furthermore, where DCI_{A} = DCI_{B} for the direct currents, the load currents can be adjusted so as to provide I_{A} = I_{B}. Accordingly, only an extremely small current flowing in an autotransformer, and thus, a winding 4 in the autotransformer generates almost no heat. Accordingly, for reasons similar to those in example 1, the power supply circuit 1 can be downsized.

### [Example 3]

FIG. 19 illustrates a power supply circuit 1, which is an example of employing a power supply circuit for a power supply for LEDs by connecting the power supply circuit to LED lighting circuits 30 as in examples 1 and 2. In the Figure, the power supply circuit 1 is a three-way divider/rectifier circuit provided with three sets of output terminals 6, which are connected to respective LED lighting circuits 30.

First output terminals 6A from among the three sets of output terminals 6 are connected to a beginning end of a series winding 4A and a beginning end of a shunt winding 4B via a full-wave rectifier circuit 7 and a current limiter circuit 8. An LED lighting circuit 30 including an LED group including a plurality of LEDs connected in series, which is a load A, is connected to the first output terminals 6A. Second output terminals 6B are connected to the beginning end of the shunt winding 4B and a point in the shunt winding 4B via a full-wave rectifier circuit 7 and a current limiter circuit 8. An LED lighting circuit 30, which is a load B, is connected to the second output terminals 6B as with the first output terminals 6A. Third output terminals 6C are connected to the point in the shunt winding 4B and a terminal end of the shunt winding 4B via a full-wave rectifier circuit 7 and a current limiter circuit 8. An LED lighting circuit 30, which is a load C, is connected to the third output terminals 6C.

In the windings 4 resulting from the above-described three-way division, the turn counts of the respective partial windings are equal to one another, and thus, are set so as to provide N₁ = N₂ = N₃. Accordingly, load voltages resulting from the division are all equal to one another, and thus, V_{A} =V_{B} = V_{C}.

The power supply circuit 1 according to example 3 is configured as described above, and if currents flowing in the three loads A, B and C are equal to one another (I_{A} = I_{B} = I_{C}), the power supply circuit 1 can efficiently distribute input power supplied from a commercial power supply 10 to all the LED lighting circuits 30 even in the case of three-way division.

### [Example 4]

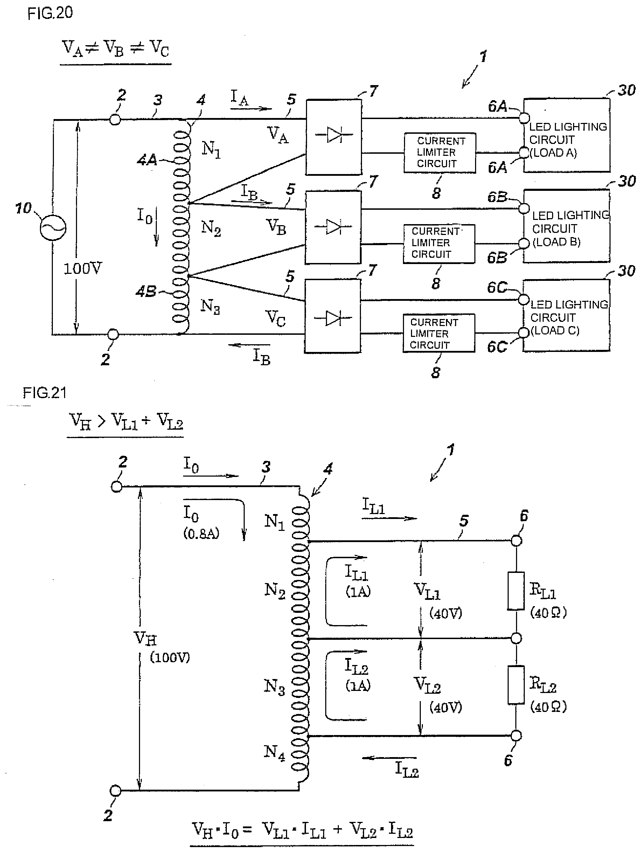

FIG. 20 illustrates a power supply circuit 1, which is a three-way divider/rectifier circuit as in example 3, but the power supply circuit 1 is provided for supply of different voltages resulting from division.

In this example, in winding 4 divided into three partial windings, the turn counts of respective partial windings are different from one another, and thus, are set to N₁ ≠ N₂ ≠ N₃. Accordingly, load voltages resulting from the division are different from one another, and thus, V_{A} ≠ V_{B} ≠ V_{C}.

The power supply circuit 1 according to example 4 is configured as described above, and this circuit also can efficiently distribute input power to all the LED lighting circuits 30 as with the above-described examples if currents flowing in the three loads A, B and C are equal to one another (I_{A} = I_{B} = I_{C}), even if load voltages V_{A}, V_{B} and V_{C} resulting from the division are not equal to one another.

### [Example 5]

FIG. 21 illustrates a power supply circuit 1, which is a two-way divider circuit as in examples 1 and 2, but is different from those in examples 1 and 2 in that the power supply circuit 1 steps an input voltage down and then divides and outputs the input voltage.

In the case of the power supply circuit 1 in the present example, a winding 4 includes: an end-part winding N₁ including a predetermined number of turns at a beginning end of the winding 4 left as a margin and an end-part winding N₄ including a predetermined number of turns at a terminal end of the winding 4 left as a margin; and partial windings N₂, N₃ resulting from dividing the part of the winding 4 between the end-part windings into two parts. Opposite ends of each of the partial windings N₂, N₃ are connected to output conductors 5, 5, and an end of each output conductor 5 is provided with an output terminal 6. With the power supply circuit 1, an input voltage input from input terminals 2, 2 via input conductors 3 is stepped down in the winding 4, and the stepped-down voltage is divided by the partial windings N₂, N₃, and power resulting from the division is output from the output terminals 6 via the output conductors 5.

Here, for the power supply circuit 1 according to the present example, the following can be seen.
- Input-side power and output-side power are equal to each other (V_{H}·I₀ = V_{L1}·I_{L1}+V_{L2}·I_{L2}).
   However, I₀ < I_{L1} and I₀ < I_{L2}.
- Where a current flowing in the end-part winding N₁ is I₀,
   the current flowing in the partial winding N₂ is I₀-I_{L1};
   the current flowing in the partial winding N₃ is I₀-I_{L2}; and
   the current flowing in the end-part winding N₄ is I₀.
- Where V_{H} = 100 [V], R_{L1} = R_{L2} = 40 [**Ω**] and V_{L1} = V_{L2} = 40 [V], I_{L1} = I_{L2} = 1 [A] and I₀ = 0.8 [A].
- If the turn counts of the end-part windings N₁ and N₄ are equal to each other, I₀ = 0.8 [A].
- If the turn counts of the partial windings N₂ and N₃ are equal to each other, I₀-I_{L1} = I₀-I_{L2} = 0.2 [A] .

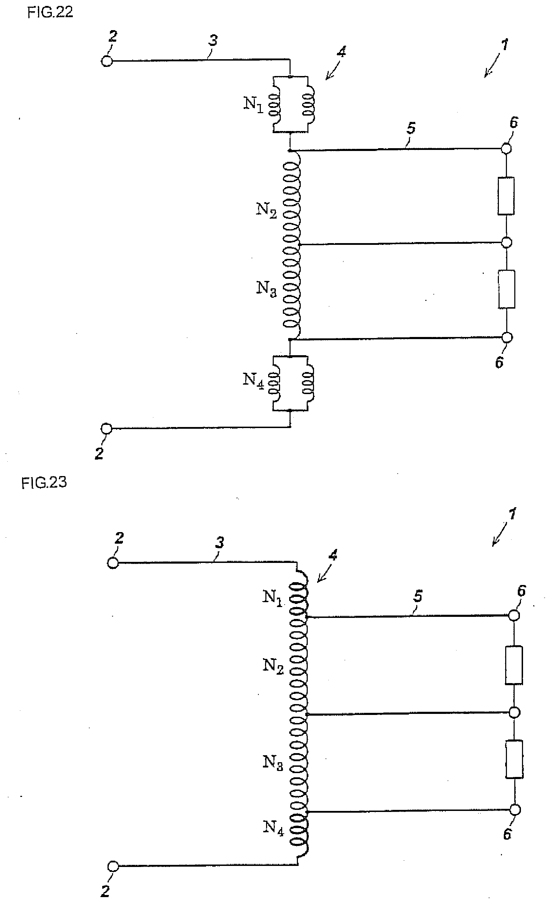

Accordingly, in order to retrieve power more efficiently with energy loss suppressed, it is necessary to reduce the winding resistances of the end-part windings N₁, N₄ in which a larger current flows. Therefore, for a method for reducing the winding resistances, the configuration illustrated in FIG. 22 or 23 can be considered. In the circuit illustrated in FIG. 22, each of the windings N₁, N₄ is divided and connected in parallel, and in the circuit illustrated in FIG. 23, the wire diameters of the end-part windings N₁, N₄ are made to be larger than those of the partial windings N₂, N₃ and connected in series. In any of the configurations, the winding resistances of the end-part windings N₁ and N₄ are smaller compared to the circuit in FIG. 21, and thus, the energy loss can be reduced, enabling the voltage stepped down by the winding 4 to be efficiently divided and supplied to loads.

### [Example 6]

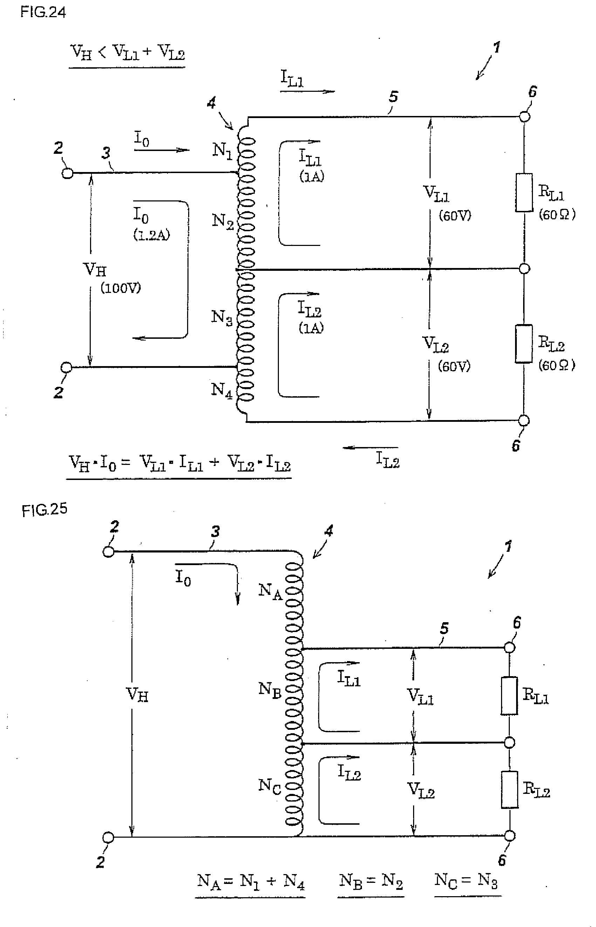

FIG. 24 illustrates a power supply circuit 1 configured to step an input voltage up and divides and outputs voltages resulting from the division, as opposed to example 5.

The power supply circuit 1 according to the present example is similar to that in example 5 in that a winding 4 includes end-part windings N₁, N₄ and partial windings N₂, N₃, but different in that an input conductor 3, 3 is connected to opposite ends of each of the partial windings N₂, N₃. The power supply circuit 1 steps up an input voltage input from input terminals 2, 2 via the input conductors 3, in the winding 4, and divides the stepped-up voltage by means of the partial windings N₂, N₃, and outputs power resulting from the division from output terminals 6 via output conductors 5.

Here, for the power supply circuit 1 according to the present example, the following can be seen. - Input-side power and output-side power are equal to each other (V_{H}·I₀ = V_{L1}·I_{L1}+V_{L2}·I_{L2}).

However, I₀ > I_{L1} and I₀ > I_{L2}.
- Where V_{H} = 100 [V], R_{L1} = R_{L2} = 60 [**Ω**] and V_{L1} = V_{L2} = 60 [V], I_{L1} = I_{L2} = 1 [A] and I₀ = 1.2 [A].
- If the turn counts of the end-part windings N₁ and N₄ are equal to each other, currents flowing in N₁ and N₄ are both 1 [A].
- If the turn counts of the partial windings N₂ and N₃ are equal to each other, currents flowing in N₂ and N₃ are both 0.2 [A].

Accordingly, in the present example, also, in order to retrieve power more efficiently with energy loss suppressed, it is necessary to reduce the winding resistances of the end-part windings N₁, N₄ in which a large current flows. For a method for reducing the winding resistances, as described with reference to FIGS. 22 and 23, a configuration in which the end-part windings N₁, N₄ are connected in series or a configuration in which the wire diameters of the end-part windings N₁, N₄ are increased and connected in series may be employed. In any of the configurations, the winding resistances of the end-part windings N₁, N₄ become small, and thus, the energy loss can be reduced, enabling the voltage stepped up by the winding 4 to be efficiently divided and supplied to loads.

### [Other examples]

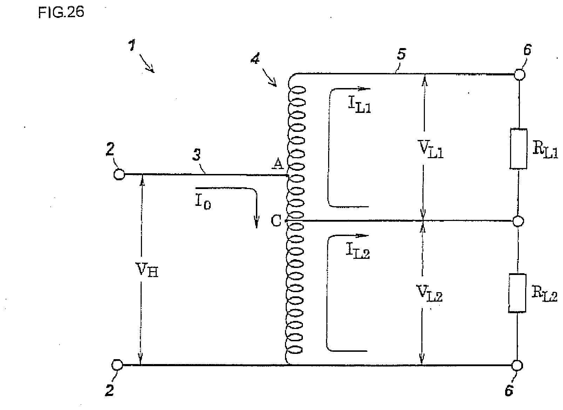

Although in example 5, the output conductors 5, 5 are connected to the winding 4 with the end-part windings N₁, N₄ at the opposite ends of the winding 4 left as margins, instead of this configuration, as illustrated in FIG. 25, it is possible that: end-part windings N₁, N₄ are jointed; and output conductors 5, 5 are connected with only a beginning end (or terminal end) of a winding 4 left as a margin. Also, although in example 6, input conductors 3, 3 are connected to the winding 4 with the end-part windings N₁, N₄ at the opposite ends of the winding 4 left as margins, instead of this configuration, as illustrated in FIG. 26, it is possible that: end-part windings N₁, N₄ are joined; and input conductor 3, 3 are connected with only a beginning end (or a terminal end) of a winding 4 left as a margin. However, in the circuit in FIG. 26, if a midpoint C in the winding 4 to which the corresponding output conductor 5 is connected is overly close to a connection point A to which the corresponding input conductor 3 is connected, the energy loss unfavorably increases by that amount, resulting in efficiency deterioration. More specifically, it is preferable that the positions of the midpoint C and the connection point A be set so that the transformation ratio between input voltage and output voltage in the winding 4 falls within a range of around 1:1 to 1:5.

Although in the Figures of examples 5 and 6, for ease of illustration, one of the output conductors 5, 5 and one of the output terminals 6, 6 are shared, the power supply circuit 1 according to the present invention requires the respective output conductors 5 and the respective output terminals 6 to be independent as in, e.g., example 1, in order to connect individual loads independently to the power supply circuit 1.

Although the above-described examples have been described in terms of examples in which a winding 4 in a power supply circuit 1 is divided into two or three parts, the number of parts is not limited to those in the examples, and a similar effect can be provided with a circuit in which a winding 4 is divided into four or more parts. Also, although LED lighting circuits 30 are connected to a power supply circuit 1 as loads, another electronic device, for example, an LED device such as an electronic billboard, colored lights or a signboard, or a heater device such as a floor heater or a snow-melting system, can also be connected to the power supply circuit 1.

## Claims

1. A power supply circuit for a plurality of LED light circuits, comprising:
two input terminals (2) to be connected to a commercial AC power supply;
two input conductors (3) connected to the input terminals;
a winding (4) connected to the input conductors;
two pairs of output conductors (5), each of the output conductors being connected to a respective one of partial windings (4A/N2, 4B/N3) resulting from dividing the winding into at least two parts, for outputting alternating-current divided by the partial windings;
two pairs of output terminals (6A, 6B), each of the output terminals being connected to a respective one of the output conductors, a first pair of the output terminals being connectable to a first LED light circuit (LOAD A) and a second pair of the output terminals being connectable to a second LED light circuit (LOAD B);
a plurality of rectifier circuits (7), a first rectifier circuit being provided between a first pair of the output conductors leading to the first pair of the output terminals connectable to the first LED circuit and a second rectifier circuit being provided between a second pair of the output conductors leading to the second pair of the output terminals connectable to the second LED circuit, for converting an alternate current resulting from division in the partial windings into a direct current;
a plurality of current limiter circuits (8), a first current limiter circuit being provided at an output end of the first rectifier circuit and a second current limiter circuit being provided at an output end of the second rectifier circuit, for limiting a current flowing into the plurality of the LED light circuits; and
two end-part windings (N1, N4), each of the end-part windings being formed at a respective end portion of the winding (4),
wherein
the plurality of partial windings (4A/N2, 4B/N3) are formed by dividing the winding (4) excluding the both end portions of the winding,
a first partial winding (4A/N2) and a second partial winding (4B/N3) are connected in series,
the first pair of the output terminals (6A,6A) is connected to both ends of the first partial winding (4A/N2),
the second pair of the output terminals (6B,6B) is connected to both ends of the second partial winding (4B/N3), and
the two input conductors (3) are connected to both ends of a series circuit consisting of the end-part windings (N1, N4) and the partial windings (4A/N2, 4B/N3).

2. The power supply circuit according to claim 1, wherein
the partial windings (4A/N2, 4B/N3) have the same number of turns with each other.

## Patentansprüche

1. Leistungsversorgungsschaltung für eine Vielzahl von LED-Lichtschaltungen, mit:
zwei Eingangsanschlüssen (2), die mit einer Wechselstrom-Netzstromversorgung zu verbinden sind;
zwei Eingangsleitern (3), die mit den Eingangsanschlüssen verbunden sind;
einer Wicklung (4), die mit den Eingangsleitern verbunden ist;
zwei Paaren von Ausgangsleitern (5), wobei jeder der Ausgangsleiter mit einer jeweiligen von Teilwicklungen (4A/N2, 4B/N3) verbunden ist, die aus einem Teilen der Wicklung in zumindest zwei Teile resultieren, zum Ausgeben von Wechselstrom, der durch die Teilwicklungen geteilt wird;
zwei Paaren von Ausgangsanschlüssen (6A, 6B), wobei jeder der Ausgangsanschlüsse mit einem jeweiligen der Ausgangsleiter verbunden ist, wobei ein erstes Paar der Ausgangsanschlüsse mit einer ersten LED-Lichtschaltung (LOAD A) verbindbar ist und ein zweites Paar der Ausgangsanschlüsse mit einer zweiten LED-Lichtschaltung (LOAD B) verbindbar ist;
einer Vielzahl von Gleichrichterschaltungen (7), wobei eine erste Gleichrichterschaltung zwischen einem ersten Paar der Ausgangsleiter bereitgestellt ist, die zu dem ersten Paar der Ausgangsanschlüsse führen, die mit der ersten LED-Schaltung verbindbar sind, und eine zweite Gleichrichterschaltung zwischen einem zweiten Paar der Ausgangsleiter bereitgestellt ist, die zu dem zweiten Paar der Ausgangsanschlüsse führen, die mit der zweiten LED-Schaltung verbindbar ist, zum Wandeln eines Wechselstroms, der aus Teilung in die Teilwicklungen resultiert, in einen Gleichstrom;
einer Vielzahl von Strombegrenzerschaltungen (8), wobei eine erste Strombegrenzerschaltung auf einer Ausgangsseite der ersten Gleichrichterschaltung bereitgestellt ist und eine zweite Strombegrenzerschaltung auf einer Ausgangsseite der zweiten Gleichrichterschaltung bereitgestellt ist, zum Begrenzen eines Stroms, der in die Vielzahl der LED-Lichtschaltungen fließt; und
zwei Endteilwicklungen (N1, N4), wobei jede der Endteilwicklungen an einem jeweiligen Endabschnitt der Wicklung (4) ausgebildet ist,
wobei
die Vielzahl von Teilwicklungen (4A/N2, 4B/N3) ausgebildet sind durch Teilen der Wicklung (4) unter Ausschluss der beiden Endabschnitte der Wicklung,
eine erste Teilwicklung (4A/N2) und eine zweite Teilwicklung (4B/N3) in Reihe geschaltet sind,
das erste Paar der Ausgangsanschlüsse (6A, 6A) mit beiden Enden der ersten Teilwicklung (4A/N2) verbunden ist,
das zweite Paar der Ausgangsanschlüsse (6B, 6B) mit beiden Enden der zweiten Teilwicklung (4B/N3) verbunden ist, und
die zwei Eingangsleiter (3) mit beiden Enden einer Reihenschaltung verbunden sind, die aus den Endteilwicklungen (N1, N4) und den Teilwicklungen (4A/N2, 4B/N3) besteht.

2. Leistungsversorgungsschaltung gemäß Anspruch 1, wobei
die Teilwicklungen (4A/N2, 4B/N3) die gleiche Anzahl von Windungen zueinander haben.

## Revendications

1. Circuit d'alimentation électrique pour une pluralité de circuits d'éclairage à DEL, comprenant :
deux bornes d'entrée (2) à connecter à une alimentation électrique commerciale CA ;
deux conducteurs d'entrée (3) connectés aux bornes d'entrée ;
un enroulement (4) connecté aux conducteurs d'entrée ;
deux paires de conducteurs de sortie (5), chacun des conducteurs de sortie est connecté à un enroulement respectif d'enroulements partiels (4A/N2, 4B/N3) résultant de la division de l'enroulement en au moins deux parties, pour délivrer un courant alternatif divisé par les enroulements partiels ;
deux paires de bornes de sortie (6A, 6B), chacune des bornes de sortie est connectée à un conducteur respectif des conducteurs de sortie, une première paire des bornes de sortie est connectable à un premier circuit d'éclairage à DEL (LOAD A) et une deuxième paire des bornes de sortie est connectable à un deuxième circuit d'éclairage à DEL (LOAD B) ;
une pluralité de circuits redresseurs (7), un premier circuit redresseur est prévu entre une première paire des conducteurs de sortie menant à la première paire des bornes de sortie connectables au premier circuit DEL et un deuxième circuit redresseur est prévu entre une deuxième paire des conducteurs de sortie menant à la deuxième paire des bornes de sortie connectables au deuxième circuit DEL, pour convertir un courant alternatif résultant de la division des enroulements partiels en un courant continu ;
une pluralité de circuits de limiteur de courant (8), un premier circuit de limiteur de courant est prévu sur une extrémité de sortie du premier circuit redresseur et un deuxième circuit de limiteur de courant est prévu sur une extrémité de sortie du deuxième circuit redresseur, pour limiter un courant circulant dans la pluralité des circuits d'éclairage à DEL ; et
deux enroulements de partie d'extrémité (N1, N4), chacun des enroulements de partie d'extrémité est formé sur une portion d'extrémité respective de l'enroulement (4),
dans lequel
la pluralité d'enroulements partiels (4A/N2, 4B/N3) sont formés en divisant l'enroulement (4) à l'exclusion des deux portions d'extrémité de l'enroulement,
un premier enroulement partiel (4A/N2) et un deuxième enroulement partiel (4B/N3) sont connectés en série,
la première paire des bornes de sortie (6A, 6A) est connectée aux deux extrémités du premier enroulement partiel (4A/N2),
la deuxième paire des bornes de sortie (6B, 6B) est connectée aux deux extrémités du deuxième enroulement partiel (4B/N3), et
les deux conducteurs d'entrée (3) sont connectés aux deux extrémités d'un circuit en série composé des enroulements de partie d'extrémité (N1, N4) et des enroulements partiels (4A/N2, 4B/N3).

2. Circuit d'alimentation électrique selon la revendication 1, dans lequel
les enroulements partiels (4A/N2, 4B/N3) ont le même nombre de tours les uns par rapport aux autres.
